(19) Europäisches Patentamt
European Patent Office
Office européen des brevets

(11) Veröffentlichungsnummer: **0 112 350**
**B1**

(12) **EUROPÄISCHE PATENTSCHRIFT**

(45) Veröffentlichungstag der Patentschrift: **17.09.86**

(51) Int. Cl.⁴: **E 21 B 43/267**, C 04 B 35/10

(21) Anmeldenummer: **83901922.1**

(22) Anmeldetag: **16.06.83**

(86) Internationale Anmeldenummer: **PCT/EP 83/00157**

(87) Internationale Veröffentlichungsnummer: **WO 84/00047 (05.01.84** Gazette **84/1)**

(54) **VERFAHREN ZUR HERSTELLUNG EINES BOHRLOCHSTÜTZMITTELS.**

(30) Priorität: **19.06.82 DE 3223024**

(43) Veröffentlichungstag der Anmeldung: **04.07.84 Patentblatt 84/27**

(45) Bekanntmachung des Hinweises auf die Patenterteilung: **17.09.86 Patentblatt 86/38**

(84) Benannte Vertragsstaaten: **AT BE CH DE FR GB LI LU NL SE**

(56) Entgegenhaltungen:
**DE-A-1 592 088**
**DE-A-2 921 336**
**FR-A-1 224 223**
**GB-A-787 875**
**GB-A-982 215**
**GB-A-2 037 727**

(73) Patentinhaber: **Battelle-Institut e.V., Am Römerhof 35 Postfach 900 160, D-6000 Frankfurt/Main 90 (DE)**

(72) Erfinder: **SHERRIFF, Robert C., Wiesenhüttenstrasse 121, D-6000 Frankfurt am Main (DE)**
Erfinder: **HEIDE, Helmut, Am Hohenstein 14, D-6233 Kelkheim (DE)**

(74) Vertreter: **Rupprecht, Klaus, Dipl.-Ing., Am Römerhof 35, D-6000 Frankfurt (Main) 90 (DE)**

**EP 0 112 350 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines Stützmittels zum Offenhalten hydraulisch erzeugter Spalten in tiefliegenden, gering permeablen Speichergesteinen von Erdgas, bei dem dem Bauxit ein thermisch zersetzbares erdalkalihaltiges Flussmittel zugesetzt wird und der Bauxit nach einer Endzerkleinerung mechanisch granuliert und anschliessend bei höheren Temperaturen gesintert wird (GB-A-2 037 727).

Bei der Gewinnung von Erdgas aus tiefliegenden Gesteinen mit geringer Permeabilität wird im allgemeinen über eine Tiefbohrung eine sogenannte «frac-Flüssigkeit» mit hohem Druck in das Lagergestein gepresst. Dabei entstehen Risse, die für das Erdgas als Diffusionswege zur Förderbohrung dienen. Diese Spalten werden durch Einpumpen von granulären Stützmitteln ausgefüllt, die einen Verschluss infolge des Gebirgsdrucks nach der Druckentlastung verhindern. Die Stützmittel bilden dabei eine druchströmbare Füllung. Es ist erwünscht, dass die Stützmittel in angenäherter Kugelform vorliegen, da nur Kugelpackungen — im Gegensatz zu Schüttungen aus unregelmässigen, splittrigen Körnungen — optimale Permeabilität besitzen.

Bei der Förderung von Erdgas aus grösseren Erdtiefen werden an die Stützmittel härtere Anforderungen bezüglich ihrer mechanischen und chemischen Eigenschaften gestellt. Die Stützmittel müssen wegen des hohen Gebirgsdrucks hohe Bruchlasten aushalten. Gegen den Angriff durch die meist meerwasserähnlichen Lagerstättenwässer bei den vorherrschenden Druck- und Temperaturbedingungen ist ausserdem eine hohe Lösungsresistenz erforderlich.

Für mittlere Erdtiefen bis etwa 2000 m sind Stützmittel bekannt, die aus Glaskugeln oder rundkörnigem Quarzsand bestehen. Solche Stützmittel halten aber den Bedindungen in tiefliegenden Lagerstätten nicht mehr stand. Nach heutigen Erkenntnissen sind in diesen Erdtiefen granuläre Stützmittel auf der Basis von $Al_2O_3$-Oxidkeramik angezeigt. Reines $Al_2O_3$ besitzt jedoch einen sehr hohen Schmelzpunkt von ca. 2200°C und demgemäss eine hohe Sintertemperatur von ca. 1800°C. Durch Zugabe von Flussmitteln und Sinterhilfen kann eine Schmelzpunkt- bzw. Sintertemperatur-Erniedrigung erzielt werden. Grössere Gehalte an Flussmitteln, wie Alkali- oder Eisenverbindungen erniedrigen zwar die Sintertemperaturen, verschlechtern jedoch gleichzeitig die Festigkeits- und Löslichkeitseigenschaften.

Es sind $Al_2O_3$-Stützmittel bekannt, die aus relativ stark verunreinigten Bauxiten gesintert werden, wobei die Verunreinigung dieser Erze gewissermassen als natürliche Flussmittel dienen. Abgesehen von der Schwankungsbreite solcher Naturprodukte hinsichtlich ihrer Zusammensetzung enthalten diese Bauxite auch nennenswerte Anteile an Verunreinigungen, welche die technischen Eigenschaften des Endprodukts beeinträchtigen. Ferner sind diese aus gesinterten Naturbauxiten erzeugten Stützmittel im Gefüge inhomogen aufgebaut. Sie enthalten zahlreiche Poren und grobkristalline Bereiche, so dass sie keine zufriedenstellenden Festigkeiten aufweisen. Ausserdem werden immer wieder Qualitätsschwankungen beobachtet.

Im Hinblick auf eine gleichbleibende Qualität und gute Eigenschaften ist es notwendig, möglichst reine $Al_2O_3$-Rohstoffe zu verwenden, was aber die Problematik von hohen Sintertemperaturen mit sich zieht.

Aus der GB-A-2 037 727 ist ein Verfahren zur Herstellung eines Stützmittels aus Bauxit bekannt, bei dem gegebenenfalls Bentonit als Flussmittel verwendet wird. In der GB-A-787 875 wird einem Aluminiumoxid-Ausgangsstoff als Flussmittel eine Mischung aus drei erdalkalihaltigen keramischen Stoffen zugesetzt. Die Komponenten des Flussmittelgemisches werden nicht im Hinblick auf deren Zersetzungsbereiche ausgewählt, so dass in beiden Fällen die Gasentwicklung bei der Zersetzung in relativ kurzer Zeit beendet ist. Dies führt zu Produkten mit nicht zufriedenstellenden physikalischen Eigenschaften.

Der vorliegenden Erfindung liegt daher die Aufgabe zugrunde, ein Verfahren zu entwickeln, nach dem ein in grossen Erdtiefen von bis zu 5000 m verwendbares oxidkeramisches Stützmittel für die Erdgasgewinnung hergestellt werden kann.

Diese Aufgabe ist dadurch gelöst, dass zwei oder mehr erdalkalihaltige Flussmittel mit unterschiedlichen Zersetzungstemperaturen in einer Menge von 5 bis 20 Gew.-% einem thermisch entwässerten Bauxit zugesetzt werden, wobei die Zersetzungsbereiche der einzelnen Flussmittelkomponenten sich überlappen und der gesamte Zersetzungsvorgang zwischen von 100 bis 900°C und über einen weiten Temperaturbereich des Sinterprozesses stattfindet. Vorteilhafte Ausführungsformen des erfindungsgemässen Verfahrens sind in den Unteransprüchen 2 bis 4 erläutert.

Es werden möglichst reine, thermisch entwässerte Bauxit-Ausgangsmaterialien verwendet. Bauxite bestehen im wesentlichen aus Hydrargillit [$Al(OH)_3$] und/oder Böhmit (ALOOH), die nach folgenden Gleichungen bei unterschiedlichen Temperaturen entwässern:

$$2\ Al(OH)_3 \xrightarrow{100\ -\ 200°C} 2\ AlO\ OH + 2\ H_2O$$

$$2\ AlO\ OH \xrightarrow{300\ -\ 700°C} Al_2O_3 + H_2O$$

In der Stützmittelmasse wird ein bei ca. 700°C vorcalcinierter Bauxit eingesetzt, weil dieses Material den weitaus grössten Teil des chemisch gebundenen Wassers abgegeben hat und somit über die Gasabgabe der Flussmittelkomponente im Gefüge des Stützmittels keine Gasblasen erzeugt. Ferner befindet sich der Bauxit in diesem Calcinierungsgrad in einem äusserst feinkörnigen Zustand und einem hochreaktiven kristallinen Unordnungsgrad.

Das Bauxit-Ausgangsmaterial wird mit gezielter Zugabe von erdalkalihaltigen Flussmitteln dotiert. Dadurch wird eine merkliche Senkung der Sintertemperatur erreicht. Darüber hinaus weisen die nach dem erfindungsgemässen Verfahren hergestellten Stützmittel verbesserte mechanische und chemische Eigenschaften auf.

Es ist bekannt, dass erdalkalihaltige Flussmittel das sogenannte Sinterintervall verkürzen, das heisst den Temperaturbereich, in dem das granuläre Stützmittel dicht sintert — ohne soweit pyroplastisch zu werden —, dass es zusammenbackt. Dies stösst in der Praxis auf Probleme, weil sich solche Produkte infolge des kurzen Sinterintervalls als Massenschüttgüter im Drehrohrofen nur schlecht sintern lassen.

Erfindungsgemäss wurde diese Problematik dadurch gelöst, dass eine Mischung aus mehreren, thermisch zersetzbaren Flussmitteln verwendet wird, deren Zersetzungsbereiche sich gegenseitig überlappen. Vorzugsweise werden dem Bauxit-Ausgangsmaterial eine Mischung aus

Calciumbentonit $(Al_{2-x}Mg_x)/(OH_2)$ $(Si_4O_{10}Ca_x \cdot nH_2O$

magnesiumhaltigem Talk $[Mg_2/(OH_2/Si_4O_{10})]$

und Dolomit $[CaMg(CO_3)_2]$

zugefügt. Diese mineralischen Beimengungen wirken hinsichtlich der Senkung der Sintertemperatur gleichsinnig, da sie in der Bauxitmatrix eine erdalkalihaltige Teilschmelze bzw. relativ niedrig schmelzende Kristallphasen erzeugen. Hinsichtlich der Sinterprozesse, die in dem keramischen Gefüge ablaufen und hinsichtlich der technischen Brennführung im Drehrohrofen besitzen diese Flussmittelkomponenten sehr unterschiedliche Aufgaben. Es handelt sich in allen Fällen um Calcium-Magnesium-Minerale, die bei der Erhitzung gasförmige Bestandteile, wie Wasserdampf im Falle von Bentonit und Talk sowie Kohlendioxyd im Falle von Dolomit, abgeben. Wichtig ist nun, dass die Gasabgabe, und damit die kristallinen Umwandlungsprozesse, die im Hinblick auf die Reaktionskinetik erwünscht ist, bei diesen Mineralien in sehr unterschiedlichen Temperaturbereichen erfolgen. Die Wasserabgabe des Bentonits findet bei ca. 150 bis 400°C statt. Die Wasserabgabe des Talks zwischen 300 und 600°C. Diese abgestuften Zersetzungsbereiche bewirken, dass die Gasabgabe allmählich über den gesamten Brennbereich erfolgt. Durch die gestreckte Entgasung der Flussmittelkomponenten wird die Gefügefestigkeit während des Sintervorgangs nicht erwünscht, so dass eine Abriebsfestigkeit beim Drehrohrofenprozess gegeben ist. Die Gasabgabe ist abgeschlossen, wenn die Flussmittelkomponente zu schmelzen beginnt. Hierdurch wird die Entstehung von Gasblasen im Gefüge des Stützmittels verhindert.

In dieser Mischung kommt dem Bentonit eine besondere Aufgabe zu. Er wirkt in der Rohmasse beim Granulierungsprozess als Bindemittel. Durch dieses Additiv wird beim Kompaktieren und Granulieren die Abriebfestigkeit erhöht. Bei der mechanischen Granulation kann aber auch ein organisches Bindemittel, z.B. Carboxymethylcellulose, zugegeben werden. Die Stützmitteleigenschaften lassen sich erfindungsgemäss durch die Art der Formgebung optimieren. Nach der Feinmahlung aller Rohstoffkomponenten, d.h. Flussmittelanteilen Bentonit, Talk und Dolomit und dem vorcalcinierten Bauxit, werden diese in ein Mischer-Kompaktierungsgerät überführt, vorgranuliert und schliesslich auf dem Granulierteller abgerollt, so dass ein perfektes Kugelgranulat entsteht. Das Kugelgranulat wird dann nach dem Brand im Drehrohrofen in den gewünschten Siebfraktionen abgesiebt.

Diese Formgebung und Brenntechnik wird durch die Art der Massezusammensetzung möglich, da die Komponenten des Flussmittels einmal infolge der Klebewirkung des Bentonits aber auch wegen der gestreckten Entgasungsreaktionen der übrigen Flussmittelanteile die mechanischen Belastungen während des Forgebungs- und Brennvorgangs ohne nennenswerten Abrieb überstehen. Neben der Verklebung des Grüngefüges durch Bentonit geht das Gefüge bei den einzelnen Entwässerungsstufen im Laufe der Temperaturerhöhung beim Brand stufenweise in ein keramisch gebundenes Material über und durchläuft dabei kein Festigkeitsminimum, bei dem die Granulatkörner zerfallen können.

Die Erfindung wird in dem nachfolgend beschriebenen Ausführungsbeispiel näher erläutert:

*Beispiel*

Als Ausgangsmaterial wird ein relativ reiner Hydrargillit-Bauxit aus Guyana folgender Zusammensetzung verwendet:

| | |
|---|---|
| $SiO_2$ | 8,77% |
| $Fe_2O_3$ | 0,75% |
| $TiO_2$ | 2,79% |
| $Na_2O$ | 0,04% |
| $K_2O$ | 0,04% |
| $Al_2O_3$ Rest (in Form von Hydrargillit) | |

Glühverlust bei 1000°C : 29,2%.

Dieser Rohrstoff wird zunächst auf eine Körnung von 5 bis 10 mm Durchmesser vorgebrochen und dann bei 700°C 1 h vorcalciniert, wobei er den weitaus grössten Teil seines physikalischen und chemisch gebundenen Wassers verliert. Dann wird er in einer Feinmahlanlage zusammen mit der Flussmittelkomponente aus 3,67% Ca-Bentonit, 3,67% Talk und 3,67% Dolomit gemischt und aufgemahlen, so dass 98% der Gesamtmenge kleiner 20 µm Korngrösse besitzen. Danach werden diese Bestandteile in einem Zwangsmischer (Fabrikat Eirich) nochmals homogenisiert, und unter langsamer Zugabe von 15 bis 20% Anmachwasser, bezogen auf die Trockenmasse, kompaktiert. Das dabei gewonnene noch unregelmässige Vorgranulat wird dann auf einem Granulierteller abgerollt und nach dem Trocknen abgesiebt (Fraktion 0,5 bis 1,6 mm ∅). Das Über- bzw. Unterkorn wird rezykliert. Das so gewonnene Kugelgranulat wird im Drehrohrofen gebrannt (maximale Brenntemperatur 1450°C, Haltezeit 1 h). Das Endprodukt besteht aus einem runden Kugelgranulat, dessen Korngrösse wegen der Brennschwingung um ca. 20% unter der des Rohrgranulats liegt. Aus diesem Endprodukt können dann die gewünschten Siebfraktionen für die Verwendung als Stützmittel abgesiebt werden.

**Patentansprüche**

1. Verfahren zur Herstellung eines Stützmittels zum Offenhalten hydraulisch erzeugter Spalten in

tiefliegenden gering permeablen Speichergesteinen von Erdgas, bei dem dem Bauxit ein thermisch zersetzbares erdalkalihaltiges Flussmittel zugesetzt wird und Bauxit nach einer Endzerkleinerung mechanisch granuliert und anschliessend bei höheren Temperaturen gesintert wird, dadurch gekennzeichnet, dass zwei oder mehr erdalkalihaltige Flussmittel mit unterschiedlichen Zersetzungstemperaturen in einer Menge von 5 bis 20 Gew.-% einem thermisch entwässerten Bauxit zugesetzt werden, wobei die Zersetzungsbereiche der einzelnen Flussmittelkomponenten sich überlappen und der gesamte Zersetzungsvorgang zwischen 100 bis 900°C und über einen weiten Temperaturbereich des Sinterprozesses stattfindet.

2. Verfahren nach Anspruch 1, dadurch gekennzeichnet, dass als Flussmittel Calciumbentonit, magnesiumhaltiger Talk und Dolomit in einem Mischungsverhältnis 1 : 1 : 1 verwendet werden.

3. Verfahren nach Anspruch 1 oder 2, dadurch gekennzeichnet, dass bei der mechanischen Granulation ein organisches Bindemittel, vorzugsweise Carboxymethylcellulose, in wässriger Lösung zugegeben wird.

4. Verfahren nach einem der Ansprüche 1 bis 3, dadurch gekennzeichnet, dass die Sinterung der Granulate bei einer Temperatur von bis zu 1450°C durchgeführt wird.

## Claims

1. Method of producing a propping agent for keeping fractures open which have been generated in subterranean less permeable reservoir rocks of natural gas by the application of hydraulic forces, whereby a thermally decomposable, alkaline-earthcontaining fluxing agent is addet to bauxite and bauxite is mechanically granluated after the final grinding and subsequently sintered at elevated temperature, characterized by the fact that, two or more alkaline-earthcontaining fluxing agents having different decomposition temperatures are added in an amount of 5 to 20 weight percent to a thermally dehydrated bauxite, the decomposition ranges of the individual fluxing agents overlapping each other and the whole decomposition reaction taking place between 100 to 900°C and over a wide temperature range of the sintering process.

2. Method as claimed in Claim 1 wherein a mixture of calcium bentonite, magnesium-containing talc and dolomite is used as fluxing agent at a mixing ratio of 1 : 1 : 1.

3. Method as claimed in Claim 1 or 2 wherein an organic binding agent, preferably carboxymethylcellulose, is added in aqueous solution during mechanical granulation.

4. Method as claimed in any of the Caims 1 to 3 wherein sintering of the granular material is carried out at a temperature up to 1450°C.

## Revendications

1. Procédé pour la production d'un élément de soutien pour maintenir ouvertes des fissures produites hydrauliquement dans des roches-magasin de gaz naturel profondes, peu perméables, dans lequel on ajoute à la bauxite un fondant contenant de métaux alcalino-terreux décomposables à la chaleur, et la bauxite est granulée mécaniquement après un broyage final et, ensuite, frittée à des températures élevées, caractérisé par le fait que l'on ajoute à une bauxite déshydratée par voie thermique deux fondants ou plus, contenant des métaux alcalino-terreux, ayant des températures de décomposition différentes, en une quantité de 5 à 20% en poids, les intervalles de décomposition des composants individuels du fondant se chevauchant et le processus de décomposition global ayant lieu entre 100 et 900°C et dans un large intervalle de température du processus de frittagge.

2. Procédé selon la revendication 1, caractérisé par le fait que l'on utilise en tant que fondant de la bentonite calcique, du talc contenant du magnésium et de la dolomite en une proportion de mélange de 1 : 1 : 1.

3. Procédé selon la revendication 1 ou 2, caractérisé par le fait que lors de la granulation mécanique on ajoute un liant organique en solution aqueuse, de la carboxyméthylcelulose de préférence.

4. Procédé selon l'une quelconque des revendications 1 à 3, caractérisé en ce que l'on effectue le frittage des granulés à une température allant jusqu'à 1450°C.